(19)

**Europäisches Patentamt**

**European Patent Office**

**Office européen des brevets**

(11) Numéro de publication: **0 489 896 B1**

(12) **FASCICULE DE BREVET EUROPEEN**

(45) Date de publication de fascicule du brevet: **28.09.94** (51) Int. Cl.⁵: **F16L 11/08**

(21) Numéro de dépôt: **91912390.1**

(22) Date de dépôt: **01.07.91**

(86) Numéro de dépôt internationale :
**PCT/FR91/00524**

(87) Numéro de publication internationale :
**WO 92/00481 (09.01.92 92/02)**

(54) **CONDUITE TUBULAIRE FLEXIBLE COMPORTANT UNE NAPPE D'ARMURE AGRAFEE.**

(30) Priorité: **29.06.90 FR 9008298**

(43) Date de publication de la demande:
**17.06.92 Bulletin 92/25**

(45) Mention de la délivrance du brevet:
**28.09.94 Bulletin 94/39**

(84) Etats contractants désignés:
**BE DE DK ES FR GB GR IT NL SE**

(56) Documents cités:
**WO-A-89/11057**          **FR-A- 2 182 372**
**FR-A- 2 590 646**        **FR-A- 2 619 193**
**GB-A- 2 059 538**        **US-A- 4 167 645**

(73) Titulaire: **COFLEXIP**
**88, avenue du Général-Leclerc**
**F-92100 Boulogne-Billancourt (FR)**

Titulaire: **INSTITUT FRANCAIS DU PETROLE**
**4, Avenue de Bois Préau**
**F-92502 Rueil-Malmaison (FR)**

(72) Inventeur: **MALLEN HERRERO, José**
**29, bd des Batignolles**
**F-75008 Paris (FR)**
Inventeur: **FERET, Jany**
**14, avenue de l'Europe**
**F-78160 Marly-le-Roi (FR)**

(74) Mandataire: **Leszczynski, André et al**
**CABINET NONY & CIE.**
**29 rue Cambacérès**
**F-75008 Paris (FR)**

## Description

La présente invention se rapporte principalement à une conduite tubulaire flexible comportant une nappe d'armure agrafée.

La présente invention se rapporte plus particulièrement à des conduites tubulaires flexibles de transport de fluides sous pression, tels qu'en particulier, les hydrocarbures produits lors d'exploitations de puits sous-marins.

COFLEXIP, une des Sociétés déposantes fabrique et commercialise en grandes longueurs de telles conduites qui présentent des caractéristiques mécaniques élevées, notamment de résistance à la traction, à l'écrasement et à la pression interne du fluide transporté et aux effets de torsion.

Il est connu d'une part de réaliser des conduites tubulaires flexibles d'un premier type comportant essentiellement un tube interne d'étanchéité, une armure de résistance composée habituellement de deux nappes croisées constituées chacune de fils disposés en hélice autour de la conduite avec un même angle d'armage, les fils des deux nappes étant enroulés avec des angles opposés par rapport à l'axe de la conduite, et une gaine externe.

Les conduites flexibles de ce type sont réalisées avec des fils d'armure en acier présentant une section pleine de forme simple, par exemple rectangulaire ou circulaire.

Typiquement, les fils des deux nappes d'armure de résistance à la traction sont posés avec un angle d'équilibre égal à 55° par rapport à l'axe de la conduite. Une telle conduite tubulaire flexible est appelée "smooth bore" en terminologie anglosaxonne. Des conduites appelées "rough bore" en terminologie anglosaxonne comportent en outre un feuillard agrafé placé à l'intérieur du tube qui constitue alors une gaine d'étanchéité.

De telles conduites tubulaires flexibles sont d'un coût relativement faible mais présentent l'inconvénient de ne pouvoir supporter que des pressions moyennes, limitées habituellement à 200 ou 250 bars.

La limitation de la résistance à la pression provient non seulement des valeurs de contraintes dans les fils d'armure, mais aussi du risque de fluage du tube ou de la gaine d'étanchéité au travers d'inévitables interstices de la nappe d'armure. En effet, les fils constituant la nappe d'armure peuvent être mal répartis, ou ils peuvent se déplacer sous l'effet des déformations imposées au flexible et par effet de cumul, la distance latérale séparant deux fils adjacents peut, localement, augmenter au-delà de la valeur moyenne du jeu entre fils et atteindre ainsi une valeur relativement importante. Néanmoins, les nappes d'armure réalisées de cette façon présentent une stabilité satisfaisante dans des conditions d'utilisation moyennement sévères, lorsque les angles d'armage des différentes nappes d'armures ont des valeurs moyennes entre environ 15° et 70°, typiquement environ 55°, ce qui permet de réaliser des conduites flexibles pouvant résister à des pressions internes relativement importantes.

Par contre, sous l'effet d'une pression élevée, par exemple supérieure à 250 bars, le tube ou la gaine d'étanchéité risque de pénétrer progressivement à cet endroit ce qui peut compromettre l'étanchéité de la conduite tubulaire flexible.

Le brevet français publié sous le numéro FR-A-2 619 193 décrit une conduite tubulaire flexible comportant deux paires d'armures armées selon deux angles différents, l'un supérieur à 55°, l'autre inférieur à 55°. L'action de la pression interne entraîne, selon la géométrie choisie, un faible raccourcissement de la conduite tubulaire flexible ou une absence de variation de cette longueur sous l'effet de la pression. Une telle conduite flexible peut présenter une résistance très élevée de sa structure mécanique aux efforts développés par la pression interne, puisqu'elle comporte quatre nappes d'armures au lieu de deux comme les conduites flexibles courantes, mais la pression interieure admissible reste limitée par le risque de pénétration de la gaine plastique dans les déjoints entre fils adjacents.

Il est connu d'autre part des conduites tubulaires flexibles d'un deuxième type destinées à résister à des pressions élevées supérieures à 200 bars, et pouvant dépasser 1000 bars pour les diamètres relativement petits. De telles conduites tubulaires flexibles comportent en outre à l'extérieur du tube ou de la gaine d'étanchéité une armure de résistance à la pression, appelée voûte comportant une ou plusieurs nappes de fils enroulés par spiralage sous un angle proche de 90° par rapport à l'axe de la conduite. L'angle de spiralage de la voûte est en général supérieur ou égal à 85° et dépasse toujours 80° par rapport à l'axe de la conduite tubulaire flexible, ce qui confère à la voûte une résistance maximale à la composante circonférentielle (hoop-stress en terminologie anglo-saxonne) des efforts engendrés par la pression interne, cette composante étant, normalement, prédominante par rapport à la charge axiale lorsque la pression interne est très élevée. La structure résistante de la conduite flexible est complétée, à l'extérieur de la voûte, par au moins deux nappes d'armures dites armures de traction constituées par des fils présentant une section de forme simple, rectangulaire ou circulaire par exemple, les angles d'armure des différentes nappes étant de sens opposés et inférieurs à 55°, typiquement de l'ordre de 30° à 45°. Les dites nappes d'armure de traction assurent, principalement, la résistance aux efforts de traction et aux efforts de torsion. La résistance à la composante circonférentielle des efforts de la pression interne est assurée, de façon prépondérante, par la voûte, et, secondairement, par les armures de traction. Par contre, du fait de son angle de spiralage élevé, la voûte offre une résistance relativement très faible aux efforts de traction et de torsion. Du fait de la faible résistance axiale de la voûte, les spires de fil qui la constituent peuvent subir des déplacements importants dans la longueur de la conduite flexible, ce qui peut entraîner la désorganisation totale de la structure et l'endommagement de la conduite. Dans le but de limiter les déplacements axiaux des spires, on utilise des fils dits agrafés, les deux bords latéraux d'un fil présentant chacun une rainure limitée par une nervure. Il existe ainsi divers types connus de fils agrafés, chacune des deux nervures latérales d'un tel fil venant s'encastrer dans la rainure d'une spire de fil adjacente. Cet encastrement est réalisé avec un certain jeu dans le sens de la largeur du fil, ce jeu déterminant la variation possible de longueur de la conduite flexible selon son axe longitudinal, et étant déterminé, pour chaque fabrication à réaliser, de façon à ce que la conduite flexible puisse être incurvée avec un rayon de courbure égal à la valeur minimale désirée.

La présence de la voûte spiralée et agrafée confère à la conduite tubulaire flexible une excellente résistance à des pressions, notamment internes, élevées.

Par contre, la présence d'une couche supplémentaire augmente le coût des matériaux utilisés pour réaliser la conduite tubulaire flexible. De plus, le spiralage de la voûte a un angle proche de 90° par rapport à l'axe de la conduite tubulaire flexible est effectué à une vitesse nettement inférieure à la vitesse de pose d'armures de traction par des armeuses. Ceci augmente le coût et le délai de fabrication de la conduite tubulaire flexible susceptible de résister à des pressions internes importantes.

Pour obtenir un flexible équilibré, c'est-à-dire un flexible présentant une variation de longueur et des effets de torsion d'amplitude suffisamment faible lorsqu'il est soumis à une pression interne élevée, il est nécessaire d'avoir une pluralité de nappes d'armure, au moins une desdites nappes d'armure ayant un angle d'armage (par rapport à l'axe) inférieure ou approximativement égal à 55° et au moins une autre nappe d'armure comportant un angle d'armage supérieur ou approximativement égal à 55°.

On dit que les nappes d'armure ont des angles complémentaires pour obtenir une conduite tubulaire flexible équilibrée. Cette notion d'angles complémentaires s'applique ainsi, d'une part, à l'ensemble des nappes d'armure des flexibles du premier type sans voûte de pression, par exemple, deux nappes croisées armées à 55° en sens opposés, et, d'autre part, à l'ensemble des nappes d'armure de traction des flexibles du deuxième type avec voûte de pression, par exemple : deux nappes d'armure croisées à 30°.

Par contre, la voûte de pression des flexibles du deuxième type ne joue pratiquement aucun rôle dans l'équilibrage de la structure, du fait que son angle de spiralage est très important. Il en résulte que les conduites flexibles de ce type sont réalisées, de façon courante, avec une seule nappe de fils constituant la voûte, sans que l'enroulement hélicoïdal des fils de la voûte soit compensé par une autre nappe de fils enroulés en sens opposé avec un angle de spiralage égal ou de valeur voisine.

Une conduite tubulaire flexible selon la présente invention comporte, entourant le tube ou la gaine d'étanchéité interne, une première nappe d'armure constituée par l'enroulement hélicoïdal d'une pluralité de fils agrafés posés avec un angle inférieur à 80°, par exemple voisin de 55°, tel que cette première nappe agrafée participe, en combinaison avec la ou les autres nappes d'armure, à la résistance de la conduite flexible aux efforts axiaux, aux efforts de torsion et à la composante circonférentielle des efforts dus à la pression interne. La seconde nappe de l'armure et d'éventuelles autres nappes armées par exemple à un angle de - 55°, sont réalisées avec des fils de section simple, non agrafable, par exemple de section rectangulaire, carrée, circulaire ou elliptique. Les angles d'armage, respectivement, de la première nappe agrafée et, selon le cas, de la seconde nappe ou des autres nappes d'armure ont des valeurs complémentaires de sorte que l'ensemble de la première nappe agrafée et de la ou des autres nappes d'armure constitue une structure résistante équilibrée.

L'utilisation de fils agrafés pour réaliser la première nappe d'armure permet d'assurer que le jeu entre deux fils adjacents reste limitée à une valeur déterminée et faible ; il en résulte que la première nappe agrafée constitue, vis-à-vis du tube ou de la gaine d'étanchéité interne, une surface d'appui présentant des discontinuités faibles et que la conduite tubulaire flexible peut être réalisée de façon à résister à des pressions internes extrêmement élevées, supérieures à 250 bars. La première nappe d'armure agrafée joue, de ce point de vue, le même rôle que la voûte de pression agrafée des flexibles connus (deuxième type décrit ci-dessus) tout en assurant une partie de la résistance aux efforts de traction et de torsion. La conduite flexible selon l'invention présente l'avantage par rapport aux flexibles connus du premier type avec voûte de pression agrafée, d'être moins coûteuse à fabriquer, puisqu'elle ne comporte pas, en plus de l'ensemble équilibré des nappes d'armure résistant à la traction et à la torsion, la nappe interne de fils spiralés avec un angle élevé, de 80 à près de 90°. Elle peut, en particulier, être réalisée de façon économique avec le même nombre de nappes que les conduites flexibles connues du premier type sans voûte de pression, tout en étant aptes à résister à des pressions internes plus élevées.

L'utilisation pour la seconde nappe d'armure des fils non agrafés permet d'utiliser des fils de section simple, non agrafable de prix de revient moins élevé que les fils agrafables et de mise en oeuvre plus facile. Bien que l'ensemble des nappes d'armure constituant la structure équilibrée qui résiste à la pression interne et aux efforts de traction et de torsion soit réalisé, de façon hétérogène, avec une première nappe de fils agrafés alors que les autres fils d'armure sont non agrafés, il a en effet été trouvé qu'une conduite flexible selon l'invention présente, en utilisation, un comportement satisfaisant.

Les travaux conduits par les sociétés déposantes ont permis, en particulier, de constater que les conditions dans lesquelles les fils de la première nappe se déforment et se déplacent sous l'effet des sollicitations appliquées aux flexibles, en cas de flexion entre autres, sont affectées par l'agrafage des fils qui limite leurs mouvements latéraux respectifs.

Les fils de la première nappe ayant ainsi un comportement différent des fils des autres nappes, alors que ces dernières réagissent de la même façon, déjà étudiée et connue, que les fils d'armure habituels des flexibles connus ; malgré ces propriétés particulières de la première nappe agrafée, et bien que les phénomènes impliqués soient complexes et qu'il n'ait pas encore été possible d'élaborer une théorie complète et des méthodes de calcul comparables à celles qui ont été mises au point pour traiter le cas des armures connues non agrafées, il a néanmoins été trouvé que le comportement des nappes d'armure selon la présente invention est tout à fait satisfaisant, en particulier pour réaliser des canalisations flexibles à haute pression utilisées dans des installations de productions pétrolières sous-marines.

La présente invention permet d'augmenter la tenue en pression de conduites tubulaires flexibles de structure simple à deux nappes d'armure croisées. Elle permet d'autre part de simplifier la structure de conduite tubulaire flexible permettant de résister à des hautes pressions.

Il est connu par FR-A-2182372 de réaliser des conduites tubulaires flexibles comportant deux nappes d'armure croisées pour résister à la traction. Dans un premier exemple de réalisation décrit dans ce document, les deux nappes croisées sont toutes les deux réalisées dans un fil en forme de S ou de Z agrafable. Dans une seconde variante de réalisation décrite dans ce brevet, les deux nappes ne sont pas agrafées. Ce document, dont les caractéristiques font l'objet du préambule de la revendication 1 de la présente demande vise essentiellement un dispositif et une méthode d'armage mettant en oeuvre un procédé particulier de préformation du fil, mais ne mentionne pas l'utilisation de la première nappe d'armure agrafée pour résister à la fois à l'effet circonférentiel des pressions moyennes ou importantes et aux forces de traction axiale en combinaison avec au moins une autre nappe d'armure présentant un angle d'armage complémentaire, de façon à réaliser une structure équilibrée.

Au contraire, la présente invention a pour but une conduite tubulaire flexible comportant une première nappe d'armure destinée conjointement avec au moins une seconde nappe de fils d'armure, à jouer simultanément le rôle de la résistance aux effets circonférentiels de la pression interne ainsi que, aux forces de traction. Ce but est atteint par les caractéristiques de la revendication 1.

Divers types connus de fils de forme agrafés peuvent être utilisés pour réaliser la première nappe agrafée.

Dans une première variante de réalisation de conduites tubulaires flexibles selon la présente invention, la première nappe agrafée est constituée par une pluralité de fils formant deux ensembles complémentaires. Les fils d'un premier ensemble sont complémentaires des fils du second ensemble de façon à pouvoir agrafer les fils appartenant audit premier ensemble avec les fils appartenant audit second ensemble. Les deux bords latéraux de chaque fil présentent chacun une rainure limitée par une nervure formant une protubérence latérale, les deux rainures d'un fil étant orientées dans le même sens.

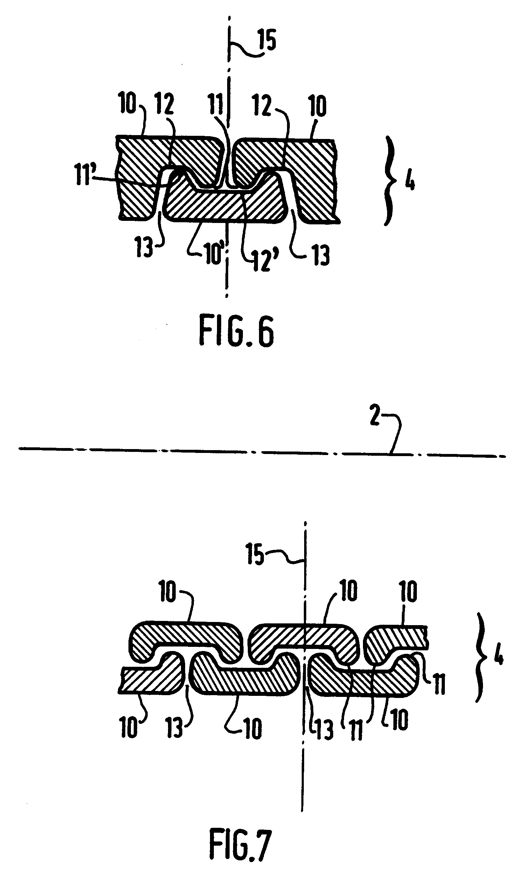

Les nervures et les rainures des fils du premier ensemble font face aux rainures et aux nervures des fils du second ensemble, de telle sorte que l'agrafage de la nappe est réalisé par l'encastrement des nervures des fils de chacun des ensembles dans les rainures des fils de l'autre ensemble. La section des fils peut présenter, en particulier, une forme de T ou une forme de U. Des exemples de tels ensembles de fils sont illustrés sur les figures 5, 6 et 7. Avantageusement, les fils agrafables de formes complémentaires sont symétriques par rapport à leur plan médian, ce qui permet d'obtenir d'excellents résultats sans devoir effectuer un cintrage sur le chant des fils.

Dans une deuxième variante, de réalisation, la première nappe agrafée est constituée par un seul ensemble comprenant une pluralité de fils présentant tous la même section agrafable. De façon en soi connue, une telle nappe de fils agrafés peut être réalisée avec des fils en forme de S ou de Z, les deux nervures latérales d'un même fil étant orientées en sens opposées, de sorte que chaque rainure d'un fil se trouve logée dans la rainure lui faisait face du fil adjacent.

D'une façon générale, l'encastrement de chacune des deux nervures latérales d'un fil dans la rainure du fil adjacent lui faisant face se fait avec un jeu latéral. Par comparaison avec les nappes de fil spirales avec un angle supérieur à 80° qui constituent les voûtes de pression agrafées, le jeu latéral entre deux fils adjacents de la première nappe agrafée peut présenter une valeur du même ordre de grandeur, ou, avantageusement, être plus faible, ce qui a un effet favorable vis à vis du risque de pénétration du tube ou de la gaine d'étanchéité dans l'intervalle entre deux fils adjacents, la largeur de cet intervalle étant limitée par le jeu latéral entre les fils.

Dans un premier mode de réalisation avantageux, l'armure résistante équilibrée de la conduite flexible, disposée autour du tube ou de la gaine d'étanchéité interne comporte, à l'extérieur de la première nappe d'armure agrafée, une seule autre nappe d'armure, cette seconde nappe étant réalisée avec des fils non agrafables posés avec un angle d'armage complémentaire de celui de la première nappe agrafée et en sens opposé.

Avantageusement, les angles d'armage des deux nappes sont égaux à ou voisin de l'angle d'équilibre 55°, leurs valeurs restant de préférence comprises entre 53 1/2° et 57 1/2°, et, avantageusement, entre 54 1/2° et 56 1/2°.

Alternativement, les angles d'armage A1 et A2 de la première nappe agrafée et de la seconde nappe non agrafée sont l'un supérieur, l'autre inférieur à 55°; avantageusement A1 et A2 sont tels que tg (A1) x tg (A2) est compris entre 1,8 et 2,3, avantageusement entre 1,9 et 2,2, de façon à faciliter l'obtention d'une structure d'armure équilibrée. En fonction des équipements utilisés pour fabriquer la conduite flexible, et, d'autre part, des conditions d'utilisation en service, les angles A1 et A2 peuvent présenter des différences plus ou moins importantes par rapport à 55°, tout en restant inférieurs à 80°.

Dans un second mode de réalisation avantageux, l'armure résistante disposée autour du tube ou de la gaine d'étanchéité interne est constituée de deux paires d'armure. La première paire, intérieure, comporte la première nappe d'armure agrafée posée sur le tube ou la gaine interne avec un angle d'armage A, la deuxième nappe, non agrafée, posée en sens inverse avec le même angle A. Les deux nappes non agrafées constituant la seconde paire d'armure, extérieure, sont posées avec un angle B, en sens opposés l'une par rapport à l'autre. Un des deux angles, A par exemple, est inférieur à 55°, l'autre angle, B par exemple, étant supérieur à 55°.

Un procédé de fabrication de conduite tubulaire flexible comporte les étapes consistant en :
- extrusion d'un tube ou d'une gaine d'étanchéité,
- mise en place d'armures, caractérisé par le fait que l'opération d'armage comporte les étapes :
- préformation en torsions et armage avec un premier angle d'armage inférieur à 80° d'une pluralité de fils agrafables constituant une première nappe d'armure s'appuyant sur le tube ou la gaine d'étanchéité interne.
- armage d'une deuxième nappe d'armure constituée par une pluralité de fils non agrafables posés en sens opposé à la première nappe et avec un angle d'armage complémentaire de la première nappe agrafée.

L'invention sera mieux comprise au moyen de la description ci-après, et des figures annexées, données comme des exemples non limitatifs parmi lesquels :
- la figure 1 est un écorché d'un premier exemple de réalisation de conduites tubulaires flexibles selon la présente invention ;
- la figure 2 est un écorché d'un deuxième exemple de réalisation de conduites tubulaires flexibles selon la présente invention ;
- la figure 3 est un écorché d'un troisième exemple de réalisation d'une conduite tubulaire flexible selon la présente invention ;
- la figure 4 est une vue en coupe des fils agrafables sur eux-même susceptibles d'être mis en oeuvre pour la réalisation de la première nappe d'armure de conduites tubulaires flexibles selon la présente invention ;
- les figures 5, 6 et 7 sont des vues en coupe des fils agrafables sur d'autres fils ayant une forme complémentaire susceptibles d'être mis en oeuvre pour la réalisation de nappes d'armures de conduites tubulaires flexibles selon la présente invention.

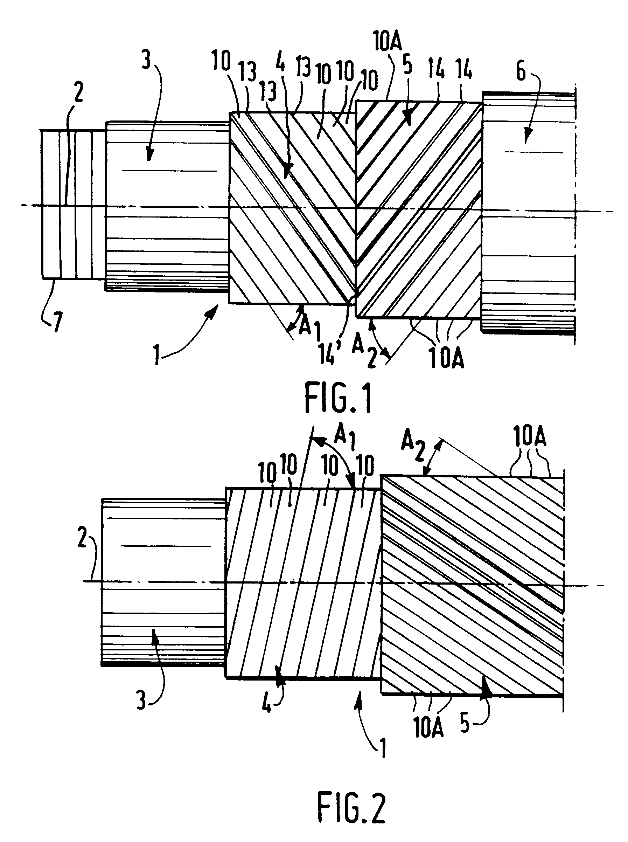

Sur les figures 1 à 7, on a utilisé les mêmes références pour désigner les mêmes éléments.

Sur la figure 1, on peut voir un premier exemple de réalisation de conduite tubulaire flexible 1, d'axe 2 selon la présente invention.

La conduite tubulaire 1 comporte un tube ou une gaine d'étanchéité 3 réalisée par exemple par extrusion, par exemple en polyamide 11 ou 12 ou en polyéthylène ou en une matière plastique fluorée. Dans la variante de réalisation avantageuse, la gaine d'étanchéité 3 comporte à l'intérieur un feuillard agrafé 7, la conduite tubulaire flexible est du type "rough-bore". Ce feuillard améliore notamment la résistance à l'écrasement.

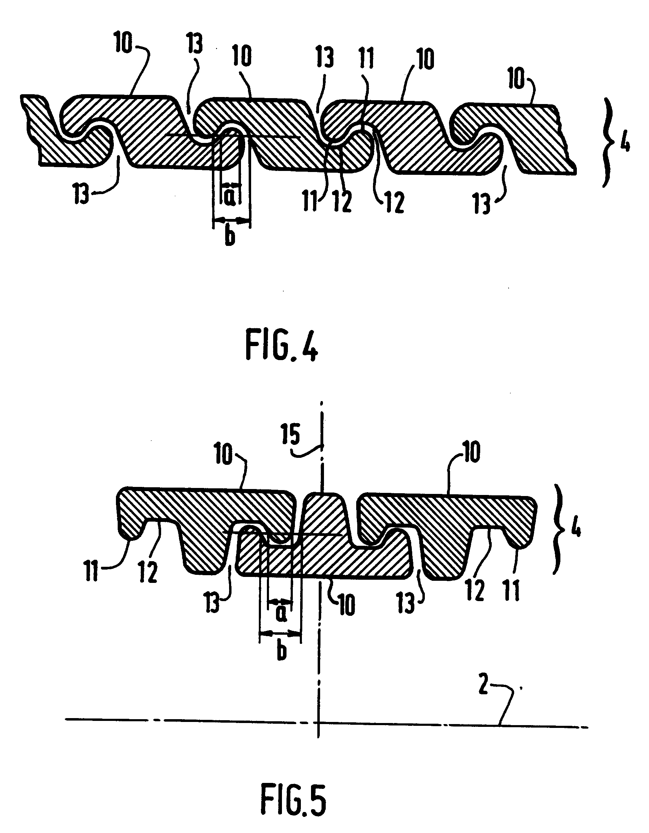

La conduite tubulaire flexible 1 comporte une nappe d'armure 4 adjacente au tube ou la gaine d'étanchéité 3. La nappe d'armure 4 est par exemple armée à 55° par rapport à l'axe de la conduite tubulaire 1. La nappe 4 est réalisée avec des fils agrafables permettant de limiter les jeux entre les pas successifs de l'hélice. On utilise par exemple des fils en forme de U illustrés sur la figure 7 ou tels que décrits dans le brevet FR-2 561 745, en forme de S ou Z illustré sur la figure 4. Avantageusement, on utilise un fil en forme de T tel que décrit dans la demande de brevet PCT WO 91/00467 déposée aux noms des Sociétés déposantes sous la priorité de la demande FR 89 08854, et publiée le 10.01.91.

La nappe d'armure 4 est entourée par une nappe d'armure 5 réalisée avec des fils non agrafables constituant des hélices de sens opposé à l'angle formé par les hélices des fils de la nappe 4. La nappe 5 est entourée par une gaine extérieure réalisée par exemple dans un matériau plastique comme par exemple le polyéthylène ou le polyamide 11.

La largeur maximale des interstices 13 entre les fils 10 de la nappe 4 est limitée grâce à l'agrafage. Ainsi on limite les possibilités de fluage du tube ou de la gaine d'étanchéité 3 dans les interstices 13 des fils de la nappe 4. Ces problèmes de fluage sont expliqués par exemple dans le brevet français 85 17497 publié sous le N° FR-A-2 590646. La largeur maximale de l'intervalle 13 est conditionnée par les dimensions en largeur que présentent, respectivement, les sections des fils adjacents, et, en particulier, par les largeurs des parties latérales formant rainures et nervures. Ainsi, dans le cas des exemples illustrés aux figures 4 et 5, la valeur maximale de l'intervalle 13, ou jeu latéral entre fils, est égale à la différence (b - a) entre la largeur b de la rainure et la largeur a de la nervure. Considérant le cas d'un flexible en situation rectiligne, son axe longitudinal formant une ligne droite, on voit que la longueur axiale du flexible peut varier entre un minimum et un maximum correspondant aux valeurs minimales et maximales de la distance entre axe l, parallèlement à l'axe du flexible, entre spires adjacentes ; il est ainsi possible de caractériser le jeu latéral par le rapport

$$\underline{\frac{\text{l maxi} - \text{l mini}}{\text{l maxi}},}$$

l maxi étant la valeur maximale que peut prendre l et l mini étant la valeur minimale que peut prendre l. Dans le cas des voûtes de pression de type connu, réalisées par spiralage d'un fil agrafé avec un angle élevé, supérieur à 80°, le dit rapport, qui est égal à la courbure D/2R de la conduite flexible, D étant le diamètre moyen de la voûte et R le rayon d'incurvation du flexible compté à mi-épaisseur de la voûte, et vaut, couramment de l'ordre de 15 à 20 %. Dans le cas des premières nappes d'armure agrafées, conformément à l'invention, ce rapport peut présenter une valeur similaire, mais, avantageusement, il peut être plus faible, de l'ordre de 10 %.

Le tube ou la gaine d'étanchéité 3 est sous-jacent à la nappe du fil d'armure 4 dans la mesure où aucune nappe d'armure ne s'interpose entre la nappe 4 et le tube ou la gaine d'étanchéité 3. Toutefois, il peut exister une couche intermédiaire entre la nappe 4 et le tube ou la gaine 3, comme par exemple un ruban plastique ou une couche de tissu.

La nappe d'armure 5 comporte des fils 10A présentant des interstices 14. En l'absence d'agrafage, on ne peut pas garantir une largeur des interstices 14 de la nappe d'armure 5 aussi régulière que les interstices 13 de la nappe d'armure sous-jacente 4. Ceci est symbolisé par l'interstice 14' qui accumule le jeu entre les fils d'armure 10A de la nappe 5. Un tel interstice, non représenté à l'échelle, s'il était directement au contact du tube ou de la gaine d'étanchéité 3 peut provoquer, sous de hautes pressions, un fluage du matériau constituant le tube ou la gaine d'étanchéité 3.

Le tube ou la gaine d'étanchéité 3 prend appui sur la nappe d'armure 4 . La nappe d'armure comporte une pluralité de fils 10. L'agrafage des fils 10 utilisés permet de limiter la taille maximale des interstices 13 entre fils 10 pour empêcher le matériau du tube, ou de la gaine d'étanchéité 3 de pénétrer dans les interstices. Sous l'effet des contraintes exercées par la pression interne, y compris pour des pressions supérieures à 200 bars, couramment de l'ordre de 350 bars et pouvant atteindre ou dépasser 700 bars. L'ensemble de l'armure constitué par les nappes 4 et 5 permet à la conduite tubulaire flexible de résister à des forces de traction importantes pouvant atteindre plusieurs centaines de tonnes, c'est-à-dire plusieurs millions de Newtons, ainsi qu'aux couples de torsion. Les nappes 4 et 5 étant armées en sens opposés avec des angles complémentaires, l'ensemble de l'armure ainsi constituée se comporte comme une structure équilibrée, en ce sens que, par exemple, les variations de longueur axiale de la conduite et les effets de torsion sont limités à des valeurs relativement très faibles lorsque la conduite flexible est soumise à une pression intérieure élevée. La nappe d'armure 4 assurant l'appui du tube ou de la gaine d'étanchéité 3, il est possible de tolérer des interstices 14 de taille supérieure dans la nappe 5. Notamment il est possible de tolérer des interstices 14' de taille supérieure répartis de façon aléatoire à la surface de la nappe 5.

Le fil d'armure est par exemple métallique, par exemple réalisé en acier, notamment acier au carbone ou acier inoxydable ou en aluminium ou alliage d'aluminium. Dans une variante de réalisation, les fils constituant la nappe 4 et/ou 5 sont réalisés en matériau composite comportant des fibres, comme par exemple des fibres de verre ou fibres de carbone incluses dans une matrice thermodurcissable ou thermoplastique.

L'angle A1 formé par les fils de la nappe 4 et l'angle A2 formé par les fils de la nappe 5, par rapport à l'axe 2 peuvent être égaux, ou approximativement égaux, comme illustré sur la Figure 1. Dans ce cas, la valeur des angles A1 et A2 est, typiquement, d'environ 55°. D'une façon générale, pour réaliser une structure équilibrée, on peut, avantageusement déterminer les angles A1 et A2 de sorte que le produit tg (A1).tg (A2) soit approximativement égal à 2. Des angles légèrement différents de 55° permettent par exemple d'utiliser des fils de dimension standard tout en respectant la contrainte d'avoir un nombre entier de fils (éventuellement un nombre pair dans le cas de fils tels que dessinés dans les figures 5, 6 et 7) répartis régulièrement sur la conduite tubulaire flexible avec un jeu latéral faible entre les fils et ceci en respectant la valeur fixée a priori pour le rayon d'enroulement des fils. On utilise par exemple des angles valant entre 53 1/2° et 57 1/2°, avantageusement entre 54 1/2° et 56 1/2°.

En outre, dans le cas de certaines applications particulières, il est possible d'armer la nappe 4 et la nappe 5 selon un sens opposé avec un même angle inférieur à 55°, ou avec un même angle supérieur à 55°, la différence par rapport à 55° pouvant atteindre 2° ou éventuellement 3° sans sortir du cadre de la présente invention.

A titre d'exemple, ci-dessous les caractéristiques principales d'une conduite tubulaire flexible selon l'invention, du type "rough bore" :

- diamètre interne 101,6 mm
- carcasse interne en feuillard agrafé, en acier inoxydable du type A 151 304, épaisseur : 4 mm
- gaine d'étanchéité interne en polyamide 11, épaisseur : 5 mm
- première nappe d'armure, épaisseur : 5,5, mm
- deuxième nappe d'armure, épaisseur : 5 mm
- ruban, épaisseur : 0,5 mm
- gaine extérieure en polyamide 11, épaisseur : 5 mm
- diamètre extérieur 151,6 mm

Dans le cas de cette structure de flexible définie pour être compatible avec un brut contenant du H2S ce qui impose de limiter les contraintes maximales dans l'acier à un niveau relativement faible, la pression maximale de service est de 534 bars.

La première nappe est réalisée avec des fils en forme de T, de largeur 13,9 mm et d'épaisseur 5,5 mm, armés à 55°. La deuxième nappe est réalisée en fils plats, de section 12 mm x 5 mm, armés en sens opposé à 57°. Les fils des deux nappes sont réalisés en acier au carbone présentant une limite à la rupture au moins égale à 850 MPa.

Grâce à l'agrafage des fils constituant la première nappe d'armure, la pression maximale d'utilisation n'est plus limitée que par la résistance mécanique de l'ensemble des armures, et non pas par le risque de pénétration de la gaine d'étanchéité interne entre les fils de la première nappe. On pourrait ainsi réaliser des flexibles pouvant supporter une pression interne atteignant 700 bars, ou même 1000 bars, en utilisant des matériaux métalliques de résistance plus élevée, en augmentant l'épaisseur des fils, ou en augmentant le nombre des nappes d'armure.

La figure 2 illustre un exemple de réalisation présentant des angles A1 et A2 différents. On peut aussi réaliser la première nappe agrafée avec un angle de 75° par exemple, et la deuxième nappe avec un angle de 28° dans le sens opposé.

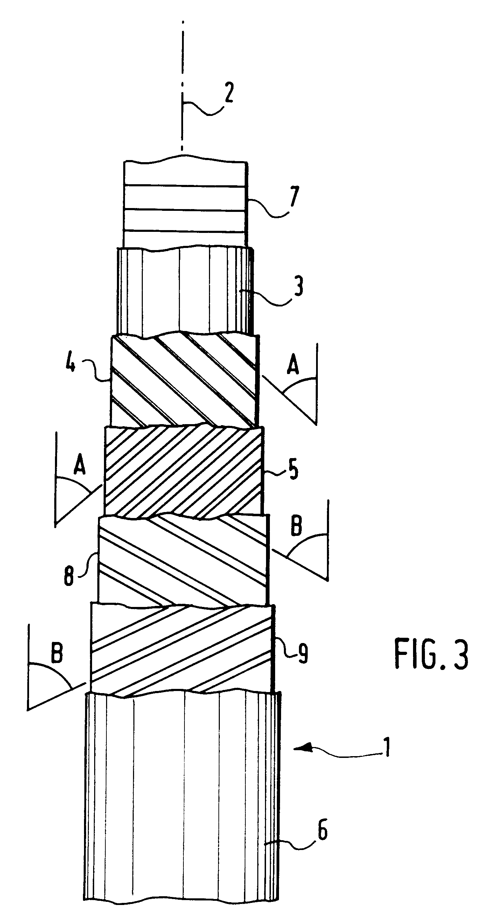

Sur la figure 3, on peut voir une conduite tubulaire flexible 1 comportant deux paires (4, 5), (8, 9) de nappes d'armure croisées. La première paire d'armure présente un angle A par rapport à l'axe 2 de la conduite tubulaire flexible 1. La seconde paire (8, 9) présente un angle B par rapport à l'axe 2 de la conduite tubulaire flexible 1. Un des angles, par exemple A est inférieur à 55°. L'autre angle, par exemple, B est supérieure à 55°. Le choix des angles, tel que le choix effectué dans le brevet 87 10997 publié sous le N° 2 619 193 précité permet d'obtenir l'équilibrage de la conduite tubulaire flexible 1 tout en contrôlant son éventuel allongement sous l'effet de la pression interne. La conduite tubulaire flexible 1 illustrée sur la figure 3 est du type rough bore comportant un feuillard agrafé 7 interne à la gaine d'étanchéité 3. Il est bien entendu que la constitution de conduite tubulaire flexible de type smooth-bore ne comportant pas de feuillard agrafé à l'intérieur du tube d'étanchéité 3 ne sort pas du cadre de la présente invention.

Dans la conduite tubulaire flexible 1 selon la présente invention au moins la nappe d'armure 4 adjacente à la gaine au tube d'étanchéité 3 est réalisée avec un fil agrafé. On bénéficie ainsi d'une excellente résistance à des pressions internes élevées tout en évitant dans le cas de l'exemple illustré sur la figure 3 un allongement indésiré de la conduite tubulaire flexible 1 sous l'effet de la pression interne.

En outre, le fait de disposer de quatre nappes d'armure, comme illustré sur la figure 3, permet d'augmenter considérablement la résistance mécanique de la conduite sous l'effet de la pression interne, ce qui est d'autant plus intéressant que le diamètre interne de la conduite est plus important.

Le fil en S ou en Z de la figure 4 n'est pas symétrique par rapport à son plan médian 15. Ainsi, comme il est expliqué dans le brevet français n° 7 215295 publié sous le N° FR-A- 2 182 372, il est avantageux de faire subir à un fil ne présentant pas de symétrie par rapport à son plan médian 15, une préformation par cintrage sur chant, dit centrage en lame de sabre dans un plan contenant l'axe du fil 10 et perpendiculaire au plan médian 15. On effectue de plus une préformation par torsion du fil autour de son axe principal pour former une hélice.

Sur les figures 5, 6 et 7, on peut voir trois exemples de nappes de fils d'armure 4 composées de deux ensembles de fils de formes complémentaires, chaque fil appartenant à un premier ensemble coopérant avec deux fils du deuxième ensemble qui l'encadre de façon à réaliser l'effet d'agrafage. Dans un tel cas, il est possible, et avantageux de réaliser des fils 10 ayant une forme symétrique par rapport à un plan médian 15. Dans un tel cas, il n'est plus nécessaire d'effectuer la préformation par cintrage sur chant, ce qui simplifie le processus de fabrication. Dans ce cas, il suffit d'effectuer une préformation par torsion du fil autour de son axe principal pour former une hélice.

Sur la figure 4, on peut voir en coupe, un exemple de réalisation d'une nappe d'armure 4. L'exemple de réalisation de la nappe 4 de la figure 4 comporte des enroulements hélicoïdaux des fils agrafables 10 en forme de S ou de Z. Chaque fil 10 comporte à chacune de ses extrémités destinées à être agrafées aux fils adjacents, une gorge 12 constituant une rainure de largeur b suivie d'une protubérance ou talon 11 constituant une nervure de largeur a. Lors de l'armage de la nappe d'armure 4, on s'assure de faire pénétrer les talons 11 dans les gorges 12 des fils adjacents.

Une fois la conduite tubulaire flexible réalisée, lorsque des fils adjacents 10 essaient de s'écarter, par exemple du fait de l'incurvation de la conduite flexible ou sous l'effet d'une traction axiale les talons 11 se comportent comme des butées limitant le mouvement relatif des fils. Ainsi, on arrive à limiter les interstices 13 entre les fils adjacents 10 dont on connaît la largeur maximale. Ceci est particulièrement important à l'endroit de l'appui de la surface extérieure du tube ou de la gaine d'étanchéité, non représenté sur la figure 4. En effet, cette limitation de la taille des interstices 13 entre les fils 10 de la nappe d'armure 4 permet d'empêcher les déformations et le fluage de ladite gaine ou dudit tube. En tous points de la surface sensiblement cylindrique constituée par la nappe d'armure 4, le tube ou la gaine d'étanchéité trouvent une surface d'appui permettant d'encaisser la pression interne.

Sur la figure 5, on peut voir un deuxième exemple de réalisation de la nappe d'armure 4 agrafée. Dans l'exemple de la figure 5, on utilise des fils agrafables 10 en forme de T. Chaque branche du T comporte une gorge 12 de largeur b suivie par un talon 11 de largeur a. Dans l'exemple illustré sur la figure 5, les fils 10 adjacents sont inversés de façon à ce que les talons 11 des fils précédents pénètrent dans la gorge du fil suivant. On limite ainsi la taille maximale des interstices 13 entre les fils 10 adjacents de la nappe d'armure 4. La nappe d'armure 4 comprend ainsi un premier ensemble de fils 10 en forme de T disposés de telle façon que le pied du T soit orienté en direction de l'axe de la conduite et un 2ème ensemble de fils 10 en forme de T disposés de telle façon que le pied du T soit orienté vers l'extérieur par rapport à l'axe de la conduite ; de préférence, les fils 10 du premier ensemble présentent tous une section identique, et les fils 10 du deuxième ensemble présentent tous également une section identique, les sections des fils constituant chacun des deux ensembles pouvant être respectivement différentes, ou identiques ainsi qu'illustré par la figure 5.

Sur la figure 6, on peut voir un troisième exemple de réalisation de la nappe d'armure 4 des conduites tubulaires flexibles selon la présente invention. Dans l'exemple de la figure 6, deux fils 10 en T semblables aux fils 10 de la figure 5 sont réunis par un fil en U 10', de même que deux fils en U 10' sont réunis par un fil en T 10. Les fils en U 10' comportent deux talons 11' pénétrant dans les gorges 12 des fils 10 en T, et une gorge 12' permettant de recevoir deux talons 11 des fils 10. Dans l'exemple illustré sur la figure 6, les fils 10' se retrouvent du côté intérieur de la conduite tubulaire flexible.

L'utilisation de fils 10 en forme de T se révèle particulièrement avantageuse pour la réalisation de la nappe d'armure 4.

Sur la figure 7, on peut voir un troisième exemple de réalisation de la nappe d'armure 4 constituée d'une pluralité de fils 10 de forme complémentaire. Dans l'exemple de la figure 7, on utilise deux ensembles de fils 10 en forme de U montés en tête bêche, c'est-à-dire que les talons 11 des deux fils 10 voisins d'un premier ensemble 10 pénètrent à l'intérieur d'une gorge d'un fil 10 appartenant à un second ensemble de fils 10.

Nous allons décrire ci-après un procédé avantageux de fabrication de conduites tubulaires flexibles selon la présente invention.

Pour les conduites tubulaires flexibles de type rough bore, on commence par fabriquer une carcasse intérieure en feuillard agrafé.

On extrude autour du feuillard agrafé la gaine d'étanchéité 3.

Pour la réalisation de conduites tubulaires flexibles du type smooth-bore, l'étape de fabrication du feuillard agrafé est omise. Il est à noter que la présence d'un tel feuillard agrafé est avantageuse chaque fois qu'il est important que la conduite tubulaire flexible puisse résister à l'écrasement, ou que la conduite flexible est destinée au transport du pétrole brut diphasique.

On effectue l'armage des fils agrafables 10 appartenant à la nappe 4. Pendant l'armage, on s'assure de l'agrafage effectif des fils les uns dans les autres.

On effectue l'armage des fils non agrafés appartenant à la nappe 5. Dans le cas de conduites tubulaires flexibles 1, comportant plus de deux nappes d'armure, comme par exemple les conduites à 3 nappes, non illustrées, les conduites à 4 nappes, illustrées sur la figure 3 ou comportant un nombre de nappes supérieur, non illustées, on poursuit l'armage des nappes successives. Après l'armage de la dernière nappe, on extrude avantageusement une gaine extérieure.

Il est possible d'insérer diverses nappes comme des rubanages ou des gaines de protection ou d'éventuelles isolations thermiques entre les nappes d'armure ou entre la gaine d'étanchéité interne et la nappe d'armure interne ou encore entre la nappe d'armure externe et la gaine extérieure sans sortir du cadre de la présente invention.

Il est bien entendu que la réalisation simultanée en continu d'au moins deux étapes consécutives de fabrication de la conduite tubulaire flexible est également possible. On peut ainsi effectuer simultanément deux ou plusieurs étapes avec un décalage linéaire dans la longueur de la conduite tubulaire flexible en cours de réalisation faisant progresser de façon continue le flexible au travers des diverses machines utilisées pour la réalisation des étapes successives de fabrication. Dans l'exemple habituellement mis en oeuvre par la Société déposante, on utilise une armeuse possédant deux cages d'armage, ce qui permet d'effectuer simultanément :
- l'armage d'une première nappe d'armure 4 agrafée, et
- l'armage d'une seconde nappe d'armure 5 non agrafée ; ainsi qu'éventuellement la pose de couches intermédiaires, par rubanage par exemple et de la même façon.

En fonction des caractéristiques des diverses nappes constituant l'armure de la conduite flexible, d'autres méthodes de fabrication sont possibles. Ainsi, dans le cas, par exemple, d'une conduite flexible du type illustré par la figure 2 dont l'armure est constituée d'une première nappe agrafée armée avec un angle élevé, pouvant dépasser 70° par exemple, mais restant inférieure à 80°, et d'une seconde nappe d'armure non agrafée armée avec un angle relativement faible, par exemple entre 15° et 35°, on peut utiliser, pour réaliser la première nappe agrafée, non pas une armeuse, mais une machine telle qu'une spiraleuse du type de celles qui sont normalement utilisées pour fabriquer les voûtes de pression avec un angle de spiralage très important, 85° par exemple. C'est ainsi que la conduite flexible décrite ci-dessus à titre d'exemple, comportant une première nappe agrafée armée à 75° et une seconde nappe non agrafée armée à 28°, peut être fabriquée, de façon économique, en réalisant la mise en place des armures en deux étapes successives distinctes :
- première étape consistant à mettre en place la nappe d'armure agrafée avec une spiraleuse. On peut utiliser tous fils agrafables par exemple en Z, en T ou en U.
- deuxième étape consistant à mettre en place la deuxième nappe d'armure non agrafée avec une armeuse à cage unique.

**Revendications**

1. Conduite tubulaire flexible comportant, de l'intérieur vers l'extérieur, une gaine tubulaire d'étanchéité, et une armure composée d'une pluralité de nappes d'armure, croisées, constituées chacune d'une pluralité de fils armés avec un angle inférieur à 80° par rapport à l'axe de la conduite tubulaire flexible, les angles d'armage des fils desdites nappes d'armure étant déterminés de façon à obtenir une conduite tubulaire flexible équilibrée, la première nappe d'armure (4) sur laquelle prend appui la gaine tubulaire (3) étant constituée par une pluralité de fils agrafés (10), ladite conduite étant caractérisée par le fait que la ou les autres nappes d'armure (5,8,9) placées à l'extérieur de ladite première nappe d'armure (4) sont constituées de fils (10a) non agrafables.

2. Conduite tubulaire flexible selon la revendication 1, caractérisée par le fait que la première nappe d'armure (4) est constituée par une pluralité de fils (10) agrafables en forme de S ou de Z.

3. Conduite tubulaire flexible selon la revendication 1, caractérisée par le fait que la première nappe d'armure (4) comporte une pluralité de fils agrafables (10) en forme de T.

**4.** Conduite tubulaire flexible selon la revendication 1, caractérisée par le fait que la première nappe d'armure (4) comporte une pluralité de fils agrafables (10,10') en forme de U.

**5.** Conduite tubulaire flexible selon l'une quelconque des revendications précédentes, caractérisée par le fait qu'elle comporte deux nappes d'armure (4,5) et que les fils agrafés de la première nappe d'armure (4) sont armés avec un angle A1 par rapport à l'axe (2) de la conduite tubulaire flexible (1), et les fils non agrafables de la seconde nappe d'armure (5) placée à l'extérieur de ladite première nappe d'armure sont armés avec un angle A2 par rapport à l'axe de la conduite tubulaire flexible avec :

$$1,9 < tg (A1) \times tg (A2) < 2,2$$

**6.** Conduite tubulaire flexible selon la revendication 5, caractérisée par le fait que les angles A1 et A2 sont sensiblement égaux.

**7.** Conduite tubulaire flexible selon l'une quelconque des revendications 1 à 4, caractérisée par le fait qu'elle comporte quatre nappes d'armure (4,5,8,9), les deux premières nappes (4,5) armées en sens opposés présentant en valeur absolue un même premier angle d'armage (A), la troisième et la quatrième nappes (8,9) armées en sens opposés présentant en valeur absolue un même second angle d'armage (B).

**Claims**

**1.** Flexible tubular pipe comprising, from the inside to the outside, a tubular sealing sheath, and an armouring composed of a plurality of crossed armouring layers, each consisting of a plurality of wires set at an angle less than 80° with respect to the axis of the flexible tubular pipe, the setting angles of the wires of the said armouring layers being determined so as to obtain a balanced flexible tubular pipe, the first armouring layer (4), on which the tubular sheath (3) bears, being constituted by a plurality of interlocked wires (10), the said pipe being characterized by the fact that the other armouring layer or layers (5, 8, 9) placed on the outside of the said first armouring layer (4) consist of wires (10a) which are not interlockable.

**2.** Flexible tubular pipe according to Claim 1, characterized by the fact that the first armouring layer (4) is constituted by a plurality of S- or Z-shaped interlockable wires (10).

**3.** Flexible tubular pipe according to Claim 1, characterized by the fact that the first armouring layer (4) comprises a plurality of T-shaped interlockable wires (10).

**4.** Flexible tubular pipe according to Claim 1, characterized by the fact that the first armouring layer (4) comprises a plurality of U-shaped interlockable wires (10, 10').

**5.** Flexible tubular pipe according to any one of the proceding claims, characterized by the fact that it comprises two armouring layers (4, 5) and that the interlocked wires of the first armouring layer (4) are set at an angle A1 with respect to the axis (2) of the flexible tubular pipe (1), and the non-interlockable wires of the second armouring layer (5) placed outside the said first armouring layer are set at an angle A2 with respect to the axis of the flexible tubular pipe where:

$$1.9 < tan (A1) \times tan (A2) < 2.2.$$

**6.** Flexible tubular pipe according to Claim 5, characterized by the fact that the angles A1 and A2 are substantially equal.

**7.** Flexible tubular pipe according to any one of Claims 1 to 4, characterized by the fact that it comprises four armouring layers (4, 5, 8, 9), the first two layers (4, 5) reinforcing in opposite directions having, in absolute value, the same first setting angle (A), the third and the fourth layers (8, 9) set in opposite directions having, in absolute value, the same second setting angle (B).

**Patentansprüche**

**1.** Flexible Hohlleitung, die von innen nach außen umfaßt:
eine schlauchförmige Dichthülle, und
eine Bewehrung aus einer Vielzahl von gekreuzten Bewehrungsmänteln, die jeweils aus einer Vielzahl von Fasern bestehen, die mit einem kleineren Winkel als 80° bezüglich der Achse der flexiblen Hohlleitung versehen sind, wobei die Bewehrungswinkel der Fasern der genannten Bewehrungmäntel so festgelegt sind, daß eine drehungsfreie flexible Hohlleitung erhalten wird, und wobei der erste Bewehrungsmantel (4), auf dem sich die schlauchförmige Dichthülle (3) abstützt, auf einer Vielzahl von verhakten Fasern (10) besteht, dadurch gekennzeichnet, daß der oder die anderen Bewehrungsmäntel (5, 8, 9), die außerhalb des genannten ersten Bewehrungsmantels (4) angeordnet sind, aus Fasern (10A) aufgebaut sind, die nicht verhakt sind.

2.  Leitung nach Anspruch 1, dadurch gekennzeichnet, daß der erste Bewehrungsmantel (4) aus einer Vielzahl von S- oder Z-förmigen verhakten Fasern (10) besteht.

3.  Leitung nach Anspruch 1, dadurch gekennzeichnet, daß der erste Bewehrungsmantel (4) eine Vielzahl von T-förmigen verhakten Fasern aufweist.

4.  Leitung nach Anspruch 1, dadurch gekennzeichnet, daß der erste Bewehrungsmantel eine Vielzahl von U-förmigen verhakten Fasern (10, 10') aufweist.

5.  Leitung nach einem der vorhergehenden Ansprüche, dadurch gekennzeichnet, daß sie zwei Bewehrungsmäntel (4, 5) aufweist, und daß die verhakten Fasern des ersten Bewehrungsmantels (4) bezüglich der Achse (2) der flexiblen Hohlleitung (1) mit einem Winkel A1 und die nicht verhakten Fasern des außerhalb des genannten ersten Bewehrungsmantels angeordneten zweiten Bewehrungsmantels (5) bezüglich der Achse der flexiblen Hohlleitung mit einem Winkel A2 versehen sind, für die gilt:

$$1,9 > \tan (A1) \cdot \tan (A2) < 2,2$$

6.  Leitung nach Anspruch 5, dadurch gekennzeichnet, daß die Winkel A1 und A2 im wesentlichen gleich sind.

7.  Leitung nach einem der Ansprüche 1 bis 4, dadurch gekennzeichnet, daß sie vier Bewehrungsmäntel (4, 5, 8, 9) aufweist, wobei die zwei ersten Mäntel (4, 5), die entgegengesetzt gerichtet geschlagen sind, im Betrag einen gleichen, ersten Bewehrungswinkel (A) und der dritte und der vierte Mantel (8, 9), die entgegengesetzt gerichtet geschlagen sind, im Betrag einen gleichen, zweiten Bewehrungswinkel (B) aufweisen.

FIG.1

FIG.2

FIG.3

FIG.4

FIG.5

EP 0 489 896 B1

FIG.6

FIG.7